# EUROPEAN PATENT SPECIFICATION

(11) **EP 0 504 346 B1**
(45) Date of publication and mention of the grant of the patent: **10.05.1995**
(21) Application number: 91916907.8
(22) Date of filing: 03.10.1991
(51) Int. Cl.: B64G 4/00, F16B 21/08, B23Q 1/00

(54) **INTERFACE FOR ORBITAL REPLACEMENT UNITS**
SCHNITTSTELLE FÜR ORBITALE WECHSELEINHEITEN
SYSTEME DE JONCTION POUR ENSEMBLES DE REMPLACEMENT ORBITAL

(30) Priority: 04.10.1990 US 592630
(43) Date of publication of application: 23.09.1992
(73) Proprietor: CANADIAN SPACE AGENCY, Montreal, Quebec H2Z 1Z7 (CA)
(72) Inventor: MEE, Francis Herbert Arthur, Alliston, Ontario L0M 1A0 (CA)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)
(86) International application number: CA9100355
(87) International publication number: WO9206005

(56) References cited:
- EP-A- 0 299 141
- EP-A- 0 386 729
- DE-A- 3 828 450
- US-A- 4 963 052

## Description

### Background of the Invention

This invention relates to an orbital replacement unit to end effector clamping jaw interface. More particularly, this invention relates to an interface that is designed for use with a manipulator. In particular, this invention relates to an interface for orbital replacement units for use in the aerospace industry.

An interface has been designed for use with orbital replacement units of the type intended for use during satellite servicing. The interface which has been previously designed has an H-shaped configuration. The end effector that is used with this H-shaped interface has lugs that project into the oppositely disposed U-shaped recesses of the H-shaped configuration. This H-shaped interface is, however, rather large and it is not suitable for use as a micro-interface for attachment to small replaceable units. A wide variety of small replaceable units are required as orbital replacement units in space stations and the like. the need for both the large interface and a micro-interface has been recognized in the aerospace industry.

The conventional H-shaped configuration provides an interface that measures about 114.3 mm (4.5")in length, 63.5 mm (2.5") in width, and 12.7 mm (.5") in thickness. A micro-interface should preferably not measure more than about 38.1 mm x 38.1 mm x 38.1 mm (1.5" x 1.5" x 1.5").

### Summary of invention

It is an object of the present invention to provide a micro-interface for orbital replaceable units and the like as claimed in claim 1. Further embodiments form the object of the dependent claims.

### Brief Description of the Drawings

Figure 1 is a plan view of an interface constructed in accordance with an embodiment of the present invention.

Figure 2 is a partially sectioned side elevation of the interface of Figure 1 attached to an interface and illustrating the manner in which it may be engaged by an end effector in use.

Figure 3 is a plan view of an interface constructed in accordance with a further embodiment of the present invention.

Figure 4 is an end view of the assembly of Figure 3.

Figure 5 is a front elevation of an interface which has a latching mechanism for releasably attaching the replaceable unit to the system in which it is to be used.

Figure 6 is a partially sectioned side view of the interface of Figure 5.

Figure 7 is a bottom plan view of the interface of Figure 6.

Figure 8 is a partially sectioned plan view of an interface and a coupling suitable for attachment to a replacement unit to permit manual insertion of the replacement unit into the system.

Figure 9 is a partially sectioned side view of an interface constructed in accordance of an embodiment of the present invention that is formed as an integral part of a threaded component shown the manner in which the interface serves to secure the replacement unit to the system in which it is to be used.

Figure 10 is a cross-sectional view of the interface of Figure 9 taken through the latching detents.

Figure 11 is a partially sectioned side view of the interface of Figure 9 showing the manner in which it is engaged by an end effector to retract the latching mechanism.

### Description of the Preferred Embodiment

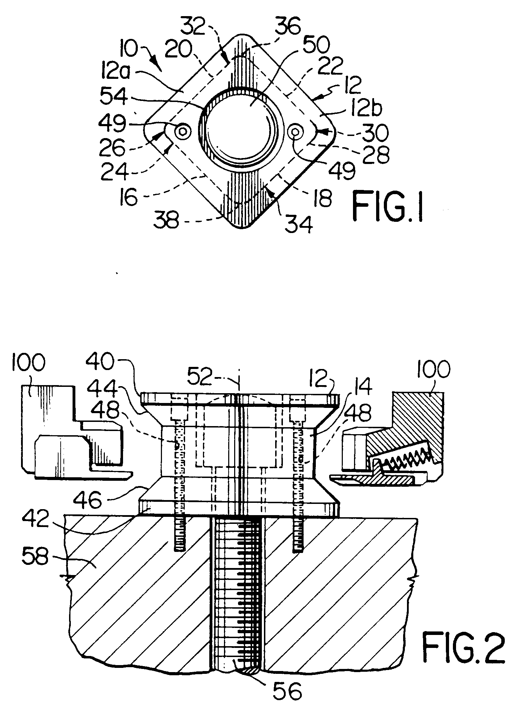

With reference to Figures 1 and 2 of the drawings, the reference numeral 10 refers generally to an interface constructed in accordance with an embodiment of the present invention.

The interface 10 has a body 12, comprising two substantially rigid body parts 12a and 12b, each having a reduced waist portion 14. The reduced waist portion 14 together form a square cross-section having side faces 16, 18, 20 and 22. The side faces 16 and 20 cooperate with one another to form a first, outwardly extending, V-shaped clamping face generally identified by the reference numeral 24, which has an apex 26. The side faces 18 and 22 cooperate with one another to form a second, outwardly extending, V-shaped clamping face which is generally identified by the reference numeral 28 and which has an apex 30. The V-shaped clamping faces 24 and 28 project laterally outwardly at opposite sides of the waist portion. Third and fourth V-shaped clamping faces 32 and 34 are located opposite one another and have apices 36 and 38 respectively.

The body parts 12a and 12b also provide the body 12 with an upper end portion 40 and a lower end portion 42 both of which project outwardly from the waist portion 14. An upper ramp 44 is formed on the upper portion 40 and is inclined inwardly towards the side faces 16, 18, 20 and 22 of 14. A lower ramp 46 is formed on the lower portion 42 and is inclined towards the side faces 16, 18, 20 and 22 of the waist portion 14. The ramps 44 and 46 serve to guide and hold vertically an end effector tool 100 into engagement with the waist portion 14.

The body parts 12a and 12b also provide the body with a passage 50 that extends therethrough along the central axis 52. The passage 50 is countersunk to provide a shoulder 54. In use, a mounting bolt 56 is used to attach the orbital replaceable unit 58 to the system in association with which it is to be used. The unit 58 may be an orbital replacement unit (ORU) to be used in a space satellite.

Mounting passages 48 are formed in the body 12 and mounting screws 49 extend through the passages 48 and serve to attach the body 12 to the orbital replacement unit 58.

The interface 10 that is described in Figures 1 and 2 of the drawings may be proportioned so as to be suitable for use with small orbital replacement units. For example, the axial length of the waist portion 14 may measure 10.2 mm (.4 inches) and the length axial [height] of the ramp portions 44 and 46 may measure 6.4 mm (.25 inches). The length of each diagonal of the square-shaped cross section of the waist portion 14 may measure 28.6 mm (1.125 inches) and the overall height may measure 31.8 mm (1.25 inches). The length of each diagonal of the upper and lower portions 40 and 42 may measure 54.6 mm (2.15 inches) and the length of each side face of the upper and lower portion 40 and 42 may measure 41.3 mm (1.625 inches).

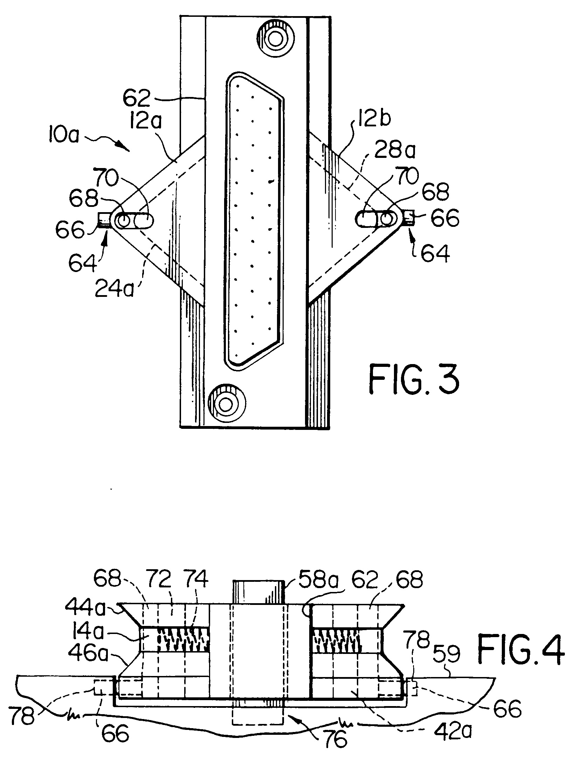

Figures 3 and 4 illustrate a further embodiment of the present invention in which the interface that is generally identified by the reference numeral 10a comprises a pair of body parts in the form of two discrete segments 12a and 12b which are attached to opposite sides of a replaceable unit in the form of a connector 62. The segments 12a and 12b are arranged with the V-shaped clamping faces oppositely disposed so as to be capable of functioning in a like manner to that described with reference to Figures 1 and 2. The reference numerals, other than 12a and 12b, that have been applied to the embodiment illustrated in Figures 3 and 4 to parts which are functionally the same as the corresponding parts described with reference to Figures 1 and 2 are distinguished by the suffix "a".

The interface 10a is further distinguished from the interface 10 in that it has two torque transmitting latch mechanisms 64, one located at the apex of each V-shaped clamping face. Each latch mechanism 64 includes a detent pin 66 and an actuator pin 68. Each detent pin 66 is slidably mounted in the lower portion 42a for movement between the extended position shown in Figures 3 and 4 and retracted position in which it is withdrawn into the lower portion 42a. an elongated slot 70 is formed in the body portions 12a and 12b for each latch mechanism 64 and extends inwardly of the apex of the clamping faces 24a and 28a. Each latch actuator pin 68 is attached to its detent pin 66 and extends perpendicularly therefrom and is slidably mounted in the elongated slot 70 therefor. A compression spring 72 is mounted in each passage 74 and serves to bear against the associated actuator pin 68 so that it normally urges that actuator pin to the extended position shown in Figure 3.

In use when the jaws of an end effector 100 move toward engagement with the oppositely disposed V-shaped clamping faces 24a and 28a, the jaws will initially contact the latch actuator pins 68 and as the jaws move toward the V-shaped clamping faces, the latch actuator pins 68 will be driven inwardly toward one another. This action will serve to move the detent pins 66 from their extended position to their retracted position. As a result, it is then possible to release the replaceable unit or connector 62 from the system 59 to which it is connected.

When the connector 62 is to be attached to the system 59, the jaws of the end effector will again close on the V-shaped clamping faces 24a and 28a and will displace the latch actuator pins 68 inwardly to move the detent pins 66 to their retracted position. The connector 62 can then be manipulated by moving the end effector until it is mated with a complementary component 76 of the system 59. The end effector can then be activated to release the clamping faces and thus permit the detent pins 66 to extend outwardly to their extended positions under the influence of the compression springs 72. The detent pins 66 then enter complementary passages 78 formed in the system 59 and as a result, the connector 62 is locked into the system 59.

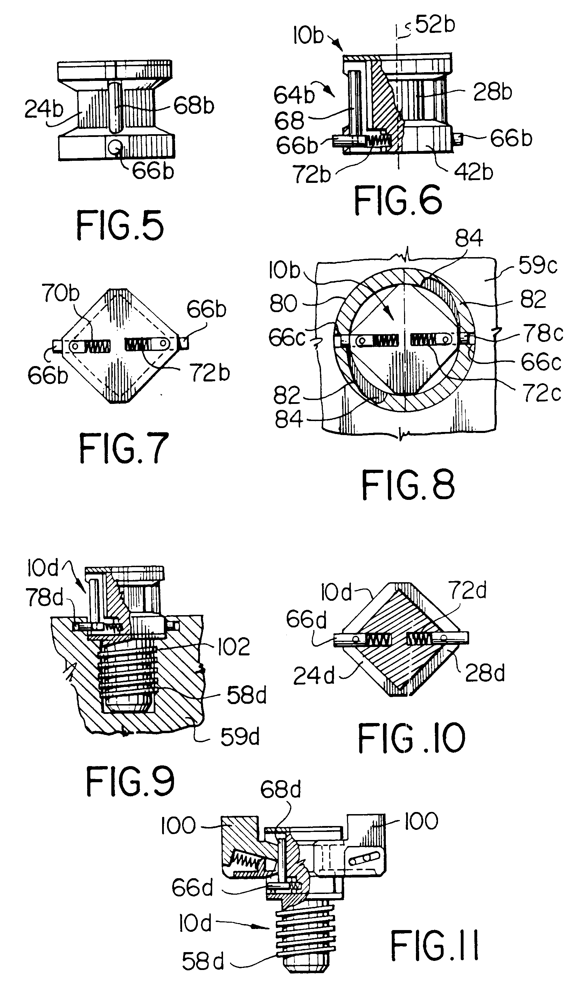

Figures 5, 6 and 7 illustrate an interface 10b which has the same basic structure as that previously described in Figures 1 and 2 of the drawings with the addition of a latch mechanism 64b. The latch mechanism 64b includes detent pins 66b slidably mounted in aligned passages formed in the lower end portion 42b. Each detent pin 66b has a compression spring 72b which serves to normally urge the detect pin 66b to its extended position. The latch actuator pin 68b extends upwardly from each detent pin 66b and is slidably mounted in a slot 70b (Figure 7). Again, the latch actuator pins 68b will be automatically driven inwardly toward the axis 52b to retract the detent pins 66 as the jaws of the end effector 100 move toward engagement with the clamping faces 24b and 28b.

Figure 8 illustrates a coupling collar 80 which may be used as a Connector attached to a system 59c which will permit mounting of the interface 10b without the aid of an end effector that has clamping jaws. The collar 80 is formed with a pair of oppositely disposed mounting passages 66c and circumferentially extending ramps 82 which increase radially in an anticlockwise direction to have a maximum radial extent in the seat area 84 the detect pins 78c enter the collar 80 through axially slows 8a extending when the detent pins 78c are in the extended position. The interface 10b can then be rotated in a clockwise direction so that the detent pins 66b travel along the ramps 82 and are driven inwardly. When the detent pins 78c are aligned with the passages 66c, compression springs 72c will drive the detent pins 78c outwardly into the passages 66c until they are located in their extended position. With the aid of this mounting collar an astronaut can, with clamping jaws, manually attach or remove the interface 10b to a system 59c which as will be described with reference to Figure 9, 10 and 11, may be in the form of a fuse box.

Figures 9, 10 and 11 illustrate an interface 10d which is the same as the interface 10b (Figures 5 to 8) and is attached to a replaceable unit 58d in the form of an electrical fuse. In Figure 11 the jaws 100 of an end effector are shown that are suitable for use with the interface. The jaws 100 each have a V-shaped notch formed on the inner face thereof which is complementary to the V-shaped clamping 24d and 28d (Figure 10) of the interface 10d. When, as shown in Figure 11 of the drawings, the latch actuator pins 68d are driven inwardly by the jaws 100 of the end effector in the manner previously described, the detent pins 66d will be driven towards their retracted positions. The end effector can then be activated to rotate the threaded portion of the fuse 58d into engagement with a threaded socket until the fuse is fully seated. The end effector jaws 100 are then separated to release the interface and as a result, the compression springs 72d will drive the detent pins 66d outwardly to their extended position in which they extend into locking passages 78d and serve to retain the fuse in an operative position with respect to the receptacle 102 of the system 59d in which the fuse seated in use.

From the foregoing, it will be apparent that the interface of the present invention is of a simple construction which provides a pair of oppositely disposed V-shaped clamping faces that are formed on a narrow waist. The V-shaped clamping faces may be clamped laterally by an end effector so that a considerable torque can be applied to the interface. The torque may serve to rotatably drive an orbital replaceable unit such as the fuse 58d into operable engagement with the complementary threaded socket. In addition, by providing a narrow waist, shoulders are provided above and below the waist which will permit substantial vertical or axial loads to be applied to the interface. The shoulders are in the form of ramps that are inclined inwardly toward the waist which will serve to guide the clamping jaws of the end effector vertically into engagement with the clamping faces of the interface.

The releasable latch mechanism serves to permit the interface and the replaceable module attached thereto to be locked in a predetermined position with respect to a support structure of the system in which they are mounted in use. The latching pins are automatically released from the supporting structure as the jaws of the end effector move into engagement with the V-shaped clamping faces to permit removal of the replaceable unit from the system.

All of these features can be incorporated into an interface which is substantially smaller than the conventional H-shaped interfaces that have been previously proposed; thus permitting the interface to function as a micro-interface for use in association with small orbital replaceable units while being capable of being manipulated by a dual purpose end effector that is also capable of operably engaging the conventional H-shaped interface. An end effector of this type is described in the applicant's copending United States application No. 07/593,648, filed October 4, 1990, entitled DUAL FUNCTION END EFFECTOR.

## Claims

1. An orbital replacement unit to end effector clamping jaw interface (10, 10a, 10b, 10d), comprising:
a) two substantially rigid body parts (12a, 12b), each body part having an upper ramp (44, 44a), a lower ramp (46, 46a), and a reduced waist portion (14) between the upper and lower ramps, and wherein
b) the upper and lower ramps of each body part are inclined inwardly towards side faces (24, 28) of the waist (14) which converge outwardly to form laterally extending, substantially V-shaped clamping faces, whereby,
c) with the two body parts (12a, 12b) attached to an orbital replacement unit (58, 58a, 58d) with the substantially V-shaped clamping faces (24, 28) extending outwardly in opposite directions from one another,
d) the inwardly inclined ramps (44, 44a, 46, 46a) will effect vertical engagement of end effector clamping jaws (100), with the orbital replacement unit (58, 58a, 58d), against dislodgement by vertical loads, applied therebetween, and
e) the substantially V-shaped clamping faces (24, 28) will effect lateral clamping engagement of end effector clamping jaws (100) to the orbital replacement unit (58, 58a, 58d), against dislodgement by a torque applied therebetween.

2. An interface as claimed in claim 1, wherein the reduced waist portions (14) together form a square cross-section with the V-shaped clamping faces (24, 28) diagonally spaced at 180° with respect to one another.

3. An interface as claimed in claim 1, wherein said body parts (12a, 12b) are a pair of discrete segments each having one of said V-shaped clamping faces (24, 28) formed thereon, said segments being attachable to opposite sides of an orbital replacement unit (58a) with the V-shaped clamping faces (24, 28) oppositely disposed.

4. An interface as claimed in claim 1, further comprising torque transmitting latch means (64, 64b), operable by end effector clamping jaws (100), for releasably attaching said body parts (12a, 12b) to a system (59, 59c, 59d) in which a replaceable unit (58, 58a, 58d) is to be mounted, said latch means (64, 64b) comprising detent means (66, 66b, 66c, 66d) mounted on each of the body parts for movement between an extended position projecting laterally from the part on which it is mounted and a retracted position that is located inwardly, from the extended position, towards that body part and resilient means (72, 72b) for urging the detent means (66, 66b, 66c, 66d) towards the said extended position.

5. An interface as claimed in claim 4 wherein the apex (26, 30) of each V-shaped clamping face (24b, 28b) forms a longitudinally extending ridge and said latch means (64, 64b) further comprises; a latch actuator member (68) connected to said detent means (66, 66b, 66c, 66d) for movement therewith and extending parallel to the longitudinally extending ridge associated therewith, each latch actuator member (68) being movable, from a first position disposed laterally outwardly from its associated ridge, when said detent means (66, 66b, 66c, 66d) is in said extended position, to a second position located inwardly from its associated ridge, when the associated detent means (66, 66b, 66c, 66d) is in said retracted position, such that displacement of each latch actuator member (68) from the first position to the second position, when each latch actuator member (68) is engaged by an end effector (100) moving into engagement with the clamping faces, will cause both the detent means (66, 66b, 66c, 66d) to move from their extended positions to their retracted positions.

6. An interface as claimed in claim 5 wherein the reduced waist portions (14) together form a square cross-section to provide first and second sets of oppositely disposed ridges, each latch actuator member (68) being associated with one of the ridges of the first set thereof, the ridges of the second set thereof being spaced from the latch actuator member (68) so as to be engageable by an end effector (100).

## Patentansprüche

1. Klemmbackenverbindung (10, 10a, 10b, 10d) zwischen einer orbitalen Wechseleinheit und einem Endeffektor mit:
a) zwei im wesentlichen steifen Körperteilen (12a, 12b), wobei jeder Körperteil eine obere Rampe (44, 44a), eine untere Rampe (46, 46a) und einen verringerten Taillenbereich (14) zwischen den oberen und unteren Rampen aufweist, und wobei
b) die oberen und unteren Rampen eines jeden Körperteils nach innen in Richtung der Seitenflächen (24, 28) der Taille (14) geneigt sind, die nach außen konvergieren, um sich seitlich erstreckende, im wesentlichen V-förmige Klemmflächen zu bilden, wobei
c) wenn die beiden Körperteile (12a, 12b) an der orbitalen Wechseleinheit (58, 58a, 58d) befestigt sind und die im wesentlichen V-förmigen Klemmflächen (24, 28) sich nach außen in entgegengesetzten Richtungen voneinander erstrecken,
d) die nach innen geneigten Rampen (44, 44a, 46, 46a) einen vertikalen Eingriff von Endeffektorklemmbacken (100) mit der orbitalen Wechseleinheit (58, 58a, 58d) gegen eine Verschiebung durch vertikale Belastungen, die zwischen ihnen wirken, bewirken werden, und
e) die im wesentlichen V-förmigen Klemmflächen (24, 28) einen seitlichen Klemmeingriff der Endeffektorklemmbacken (100) mit der orbitalen Wechseleinheit (58, 58a, 58d) gegen eine Verschiebung durch ein Drehmoment, das zwischen ihnen anliegt, bewirken werden.

2. Eine Verbindung wie in Anspruch 1 beansprucht, worin die verringerten Taillenbereiche (14) zusammen einen quadratischen Querschnitt mit V-förmigen Klemmflächen (24, 28), welche diagonal um 180° gegeneinander beabstandet sind, bilden.

3. Eine Verbindung wie in Anspruch 1 beansprucht, worin die Körperteile (12a, 12b) ein Paar von diskreten Segmenten sind, wobei an jedem eine der V-förmigen Klemmflächen (24, 28) ausgebildet ist, wobei die Segmente an gegenüberliegenden Seiten einer orbitalen Wechseleinheit (58a), an der die V-förmigen Klemmflächen (24, 28) gegenüberliegend angeordnet sind, befestigbar sind.

4. Eine Verbindung wie in Anspruch 1 beansprucht, zu der weiterhin gehören Drehmomentübertragungsrastmittel (64, 64b), die durch Endeffektorklemmbacken (100) betätigbar sind, um lösbar die Körperteile (12a, 12b) an einem System (59, 59c, 59d) zu befestigen, in dem eine austauschbare Einheit (58, 58a, 58d) befestigt werden soll, wobei die Rastmittel (64, 64b) Rastelemente (66, 66b, 66c, 66d) aufweisen, die an jedem der Körperteile für eine Bewegung zwischen einer ausgefahrenen Position, die seitlich von dem Teil vorstehen, an dem sie befestigt sind, und einer zurückgezogenen Position, die innen von der ausgefahrenen Position in Richtung des Körperteils positioniert ist, montiert sind, und federnde Mittel (72, 72b), um die Rastmittel (66, 66b, 66c, 66d) in Richtung der ausgefahrenen Position zu beaufschlagen.

5. Eine Verbindung wie in Anspruch 4 beansprucht, worin die Spitze (26, 30) jeder V-förmigen Klemmfläche (24b, 28b) einen sich in Längsrichtung erstreckenden Steg bildet und das Rastmittel (64, 64b) weiterhin umfaßt: ein Rastbetätigungselement (68), das an dem Rastmittel (66, 66b, 66c, 66d) für eine Bewegung mit diesem verbunden ist und sich parallel zu dem diesem zugeordneten und sich in Längsrichtung erstreckenden Steg erstreckt, wobei jedes Rastbetätigungselement (68) von einer ersten Position, die seitlich außerhalb von seinem zugeordneten Steg positioniert ist, wenn sich das Rastmittel (66, 66b, 66c, 66d) in der ausgefahrenen Position befindet, in eine zweite Position, die innerhalb von seinem zugeordneten Steg positoniert ist, wenn das zugeordnete Rastmittel (66, 66b, 66c, 66d) sich in der zurückgezogenen Position befindet, bewegbar ist, so daß eine Verschiebung jedes Rastbetätigungselements (68) von der ersten Position zu der zweiten Position bewirken wird, daß sich beide Rastmittel (66, 66b, 66c, 66d) von ihrer ausgefahrenen Position in ihre zurückgefahrene Position bewegen, wenn jedes Rastbetätigungselement (68) durch einen Endeffektor (100) gegriffen wird, der sich in Eingriff mit den Klemmflächen bewegt.

6. Eine Verbindung wie in Anspruch 5 beansprucht, worin die verringerten Taillenbereiche (14) zusammen einen quadratischen Querschnitt bilden, um erste und zweite Sätze von einander gegenüberliegend angeordneten Stegen zu bilden, wobei jedes Rastbetätigungselement (68) einem der Stege des ersten Satzes von diesen zugeordnet ist, wobei die Stege des zweiten Satzes von diesen von dem Rastbetätigungselement (68) beabstandet ist, um durch einen Endeffektor (100) gegriffen werden zu können.

## Revendications

1. Interface (10, 10a, 10b, 10d) à mâchoires de serrage entre une unité de remplacement orbitale et un effecteur terminal, comprenant:
a) deux parties de corps (12a, 12b) sensiblement rigides, chaque partie de corps présentant une rampe supérieure (44, 44a), une rampe inférieure (46, 46a), et une partie à taille réduite (14) entre les rampes supérieure et inférieure, et où
b) les rampes supérieure et inférieure de chaque partie de corps sont inclinées vers l'intérieur en direction de faces latérales (24, 28) de la taille (14) qui convergent vers l'extérieur pour former des faces de serrage s'étendant latéralement et sensiblement en forme de V, grâce à quoi
c) lorsque les deux parties de corps (12a, 12b) sont attachées à une unité de remplacement orbitale (58, 58a, 58d) et que les faces de serrage (24, 28) sensiblement en forme de V s'étendent vers l'extérieur dans des directions opposées l'une par rapport à l'autre,
d) les rampes inclinées vers l'intérieur (44, 44a, 46, 46a) effectueront un engagement vertical des mâchoires de serrage (100) de l'effecteur terminal avec l'unité de remplacement orbitale (58, 58a, 58d) à l'encontre d'un déplacement sous des charges verticales appliquées entre elles, et
e) les faces de serrage (24, 28) sensiblement en forme de V effectueront un engagement de serrage latéral des mâchoires de serrage (100) de l'effecteur terminal sur l'unité de remplacement orbitale (58, 58a, 58d) à l'encontre d'un déplacement sous l'effet d'un couple appliqué entre elles.

2. Interface selon la revendication 1, dans lequel les parties de taille réduite (14) forment ensemble une section transversale carrée, les faces de serrage en forme de V (24, 28) étant espacées en diagonale à 180° l'une par rapport à l'autre.

3. Interface selon la revendication 1, dans lequel lesdites parties de corps (12a, 12b) sont une paire de segments discrets ayant chacun l'une desdites faces de serrage (24, 28) en forme de V formée sur lui-même, lesdits segments pouvant être attachés sur des côtés opposés d'une unité de remplacement orbitale (58a), les faces de serrage (24, 28) en forme de V étant disposées en opposition.

4. Interface selon la revendication 1, comprenant en outre des moyens formant verrou (64, 64b) pour la transmission de couple, capables d'être actionnés par les mâchoires de serrage (100) de l'effecteur terminal, afin d'attacher de façon détachable lesdites parties de corps (12a, 12b) à un système (59, 59c, 59d) dans lequel une doit monter une unité de remplacement (58, 58a, 58d), lesdits moyens formant verrou (64, 64b) comprenant des éléments à détente (66, 66b, 66c, 66d) montés sur chacune des parties de corps afin de se déplacer entre une position déployée en projection latéralement depuis la partie sur laquelle ils sont montés, et une position rétractée qui est située vers l'intérieur, depuis la position déployée et en direction de cette partie de corps, et des organes élastiques (72, 72b) afin de repousser les éléments à détente (66, 66b, 66c, 66d) en direction de ladite position déployée.

5. Interface selon la revendication 4, dans lequel le sommet (26, 30) de chaque face de serrage (24b, 28b) en forme de V forme une arête qui s'étend longitudinalement, et dans lequel lesdits moyens formant verrou (64, 64b) comprennent en outre : un élément d'actionnement (68) de verrou relié auxdits éléments à détente (66, 66b, 66c, 66d) afin de se déplacer avec ceux-ci et s'étendant parallèlement à l'arête longitudinale qui leur est associée, chaque élément d'actionnement de verrou (68) pouvant être déplacé, depuis une première position située latéralement vers l'extérieur de son arête associée, lorsque lesdits éléments à détente (66, 66b, 66c, 66d) sont dans ladite position déployée, vers une seconde position située à l'intérieur de son arête associée, lorsque les éléments à détente (66, 66b, 66c, 66d) associés sont dans ladite position rétractée, de sorte que le déplacement de chaque élément d'actionnement de verrou (68) depuis la première position vers la seconde position, lorsque chaque élément d'actionnement de verrou (68) est engagé par un effecteur terminal (100) qui se déplace en engagement avec les faces de serrage, amènera les deux éléments à détente (66, 66b, 66c, 66d) à se déplacer vers leurs positions déployées vers leurs positions rétractées.

6. Interface selon la revendication 5, dans lequel les parties de taille réduite (14) forment ensemble une section transversale carrée afin de réaliser un premier et un second groupe d'arêtes disposées en opposition, chaque élément d'actionnement de verrou (68) étant associé à l'une des arêtes du premier groupe, les arêtes du second groupe étant espacées de l'élément d'actionnement de verrou (68) de manière à pouvoir être engagées par un effecteur terminal (100).
